# FASCICULE DE BREVET EUROPEEN

(11) **EP 1 192 365 B1**
(45) Date de publication et mention de la délivrance du brevet: **20.10.2004**
(21) Numéro de dépôt: 99973854.5
(22) Date de dépôt: 10.11.1999
(51) Int. Cl.: F16D 65/16, F16D 65/56

(54) **FREIN A DISQUE AVEC DISPOSITIF DE FREIN DE PARKING A HAUT RENDEMENT**
SCHEIBENBREMSE MIT FESTSTELLBREMSVORRICHTUNG MIT HOHEM WIRKUNGSGRAD
DISC BRAKE WITH A HIGH-PERFORMANCE PARKING BRAKE DEVICE

(30) Priorité: 14.05.1999 FR 9906147
(43) Date de publication de la demande: 03.04.2002
(73) Titulaire: Salou, Alain, 75018 Paris (FR)
(72) Inventeur: Salou, Alain, 75018 Paris (FR)
(86) Numéro de dépôt international: PCT/FR1999/002758
(87) Numéro de publication internationale: WO 2000/070237

(56) Documents cités:
- DE-A- 19 853 721
- US-A- 3 638 763
- US-A- 3 701 400
- US-A- 3 900 084

## Description

La présente invention concerne un système de frein de parking pour frein à disque. Un système de frein de parking selon le préambule de la revendication 1 est décrit dans le document US-A-3900084.

Plus précisément le système selon la revendication 1 contrairement aux autres systèmes connus est très compact avec un rendement très supérieur à ceux connus du marché. Il assume trois fonctions principales :
- la fonction frein à main par transfert de fonction dévissage / roulement ;
- la fonction principale frein hydraulique avec rappel automatique ;
- la fonction rattrapage d'usure automatique analogique.

Pour la première fonction précitée, les systèmes connus assurent la mise en rotation d'un plateau, déplaçant des billes en contact avec un autre plateau (libre en translation, mais), lié en rotation par une autre vis anti-rotation ou un piétage, l'effort axial ainsi obtenu étant transmis par une (autre vis dite de réglage) en contact avec le nez du piston de frein.

Le rattrapage d'usure se faisant par rotation de cette vis par rapport au piston lorsque celle-ci, réversible, est mise en extension, tractée par le nez du piston d'un côté et son écrou de l'autre côté ; ces systèmes ont l'inconvénient d'avoir un mauvais rendement du fait de la présence de la vis anti-rotation ou du pion (piétage) générant des frottements préjudiciables donnant un rendement global des systèmes avoisinant les 60%.

Le système (à l'écrou flottant) propose sans vis anti-rotation ni piétage (pion) remédie à cet inconvénient avec un rendement global théorique de 98%, l'ensemble des fonctions mécaniques (de charge) à assumer se faisant par roulement, sans frottement.

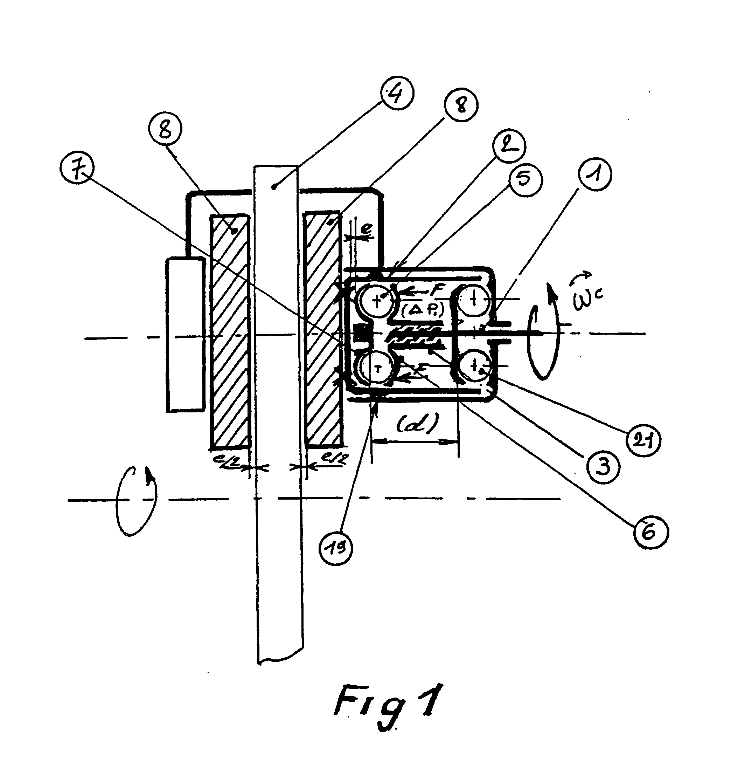

L'algorithme de fonctionnement étant le suivant (Cf. figure 1) :

Mise en rotation d'une vis (1) selon le sens du couple ωᵢ^{c} et poussée du piston (2) contre les patins (8) du disque (4), mise en contrainte du disque (4), du fait du mauvais rendement du système vis / écrou lors de la mise sous contrainte, blocage de (1) sur (3). Alors les billes ou éléments de roulement (5) prises en sandwich entre les deux plateaux (6) et (7) sont entraînées en rotation, le plateau (7) étant plaqué par frottement en nez de piston, les billes (par roulage sur rampes) ayant tendance à écarter les plateaux (6) et (7) et à plaquer encore plus les patins (8) sur le disque. Cette deuxième phase étant appelée phase de mise en forte contrainte, au relâcher du couple selon ω, les billes (5) retourneront à leur position initiale dans les empreintes des plateaux (6) et (7) puis la contrainte initiale de placage du piston sur les patins fera tourner le vis (1) réversible jusqu'à sa position de départ par rotation inverse.

Fonction hydraulique en frein principal : Lors de la mise en pression hydraulique le plateau (7) est plaqué par différentiel de pression interne / externe sur le nez du piston (2) neutralisant ainsi toute possibilité de rotation de (7) par rapport à (2) donc toute possibilité de rattrapage d'usure par rotation définitive de (1) dans (3) à la mise en pression hydraulique.

Fonction de rattrapage d'usure des patins : Après un certain nombre de freinages, il se produit un jeu e/2 entre les patins (8) et le disque (4), ce jeu générant à son tour un espace (e) entre le plateau (7) et le nez du piston (2) en l'absence de pression hydraulique du fait que le plateau (6) contraint par un moyen élastique (F) est en permanence plaqué sur le plateau (7), prenant ainsi les billes en sandwich entre plateaux; il s'en suit que la distance (d) entre l'extrémité du plateau (7) et la vis (1) restant constante, l'écart (e) se localisera entre (7) et (2), ce qui fera que, lors de la mise en pression hydraulique suivante (prochain freinage à la pédale) l'écart (e) sera comblé par une rotation du plateau (7) par rapport à (2), générée par la rotation de (3) par rapport à (1), (3) étant mis en traction par (6) lui-même plaqué par (F) sur (7) ; en conséquence il y aura eu rattrapage d'usure du patin jusqu'à ce que la pression hydraulique plaque (7) sur (2) ce qui stoppera le rattrapage.

La figure 2 montre une version du système intégré dans un frein, la mise en fonctionnement de la fonction frein de parking se faisant par rotation de (11) levier de commande entrainant (1) ,appuyée sur la butée à roulement (21).

La figure (3) montre une version du système où la force de placage des deux plateaux (7) et (6) est faite par la traction du ressort (12) sur la cage (13) et la mis en contrainte de rotation constante de (1) sur (3) le ressort (12) étant préalablement bandé.

La neutralisation de la rotation possible de (7) se faisant par placage de (7) sur (2) grâce au piston (20) en communication avec l'extérieur et lie à (7),le ressort (12) accroché sur (1) et sur la cage (13) étant mis en traction et torsion par le vissage initial de (1) dans (3).

La remise à zéro du système en cas de changement des patins (8) se fera par rotation de (7) par action (poussé/vissé) sur le piston central (20).

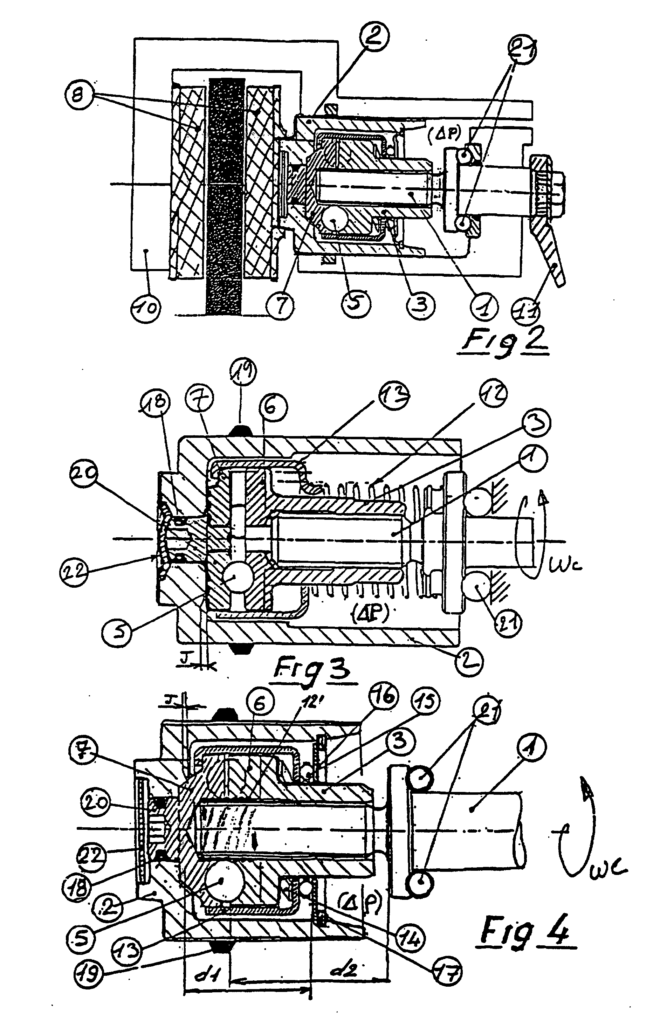

Selon une autre version, figure 4, il est intercalé entre la cage (13) et l'écrou (3) une rondelle élastique (14) générant la force (F) précitée, le plateau (7) étant en permanence plaqué sur (2) par l'effet de la rondelle (14), la distance entre l'interface (7) / à (2) et l'interface (15) par rapport à (16) étant constante il s'en suivra que toute usure des patins (8) générera de fait un jeu (J) entre la pièce (2) et la pièce (7), (d1) étant une longueur constante caractérisée par la cote interne de la cage (13) et le placage de (14) entre (13) et (6), le joint (18) assurant l'étanchéité du piston (20) sur (2), l'opercule clipsable (22) la fonction antipoussière.

En freinage hydraulique (7) est plaqué sur (2) grâce à (20) en contact avec l'extérieur et la pression hydraulique ; le piston (2) part vers le disque (4), la distance entre (6) et (1) étant constante (d2) sauf rotation de (3) par rapport à (1) mais qui est neutralisé par les billes (5) en appui sur (7) ( prises en sandwich entre (6) et (7)) dans ces conditions le déplacement du piston vers le disque sous l'effet de la pression hydraulique, comprimera la rondelle élastique (14) poussée par le circlip (17), la rondelle (16), la butée à billes (15) puis la cage (13).

Au lâcher de la pression hydraulique (ΔP), la rondelle (14) aidée par le joint carré (19) du frein ramènera le piston à sa position initiale.

En cas d'usure patin (8) les efforts de retour du joint carré (19) et de la rondelle (14) s'opposeront progressivement créant un jeu (J) qui sera rattrapé à la prochaine montée en pression hydraulique. Si ce jeu du fait du rappel aléatoire du joint carré se fait entre le nez de piston (2) et le patin (8), (7) restant parfaitement plaqué sur (2), à la montée en pression hydraulique il y aura d'abord déplacement du piston (2) pour combler le jeu entre (8) et (2) puis traction de (3) par (1) (fixe en déplacement longitudinal) faisant apparaître un nouveau jeu entre (7) et (2), la rondelle étant elle-même poussée par (17), lié à l'avancement du piston. Il y aura compression de (14) sur le plateau (6)et rattrapage d'usure par rotation de (3) sur (1) jusqu'à placage de (2) sur (7) avec jeu J = 0 qui stoppera le rattrapage d'usure.

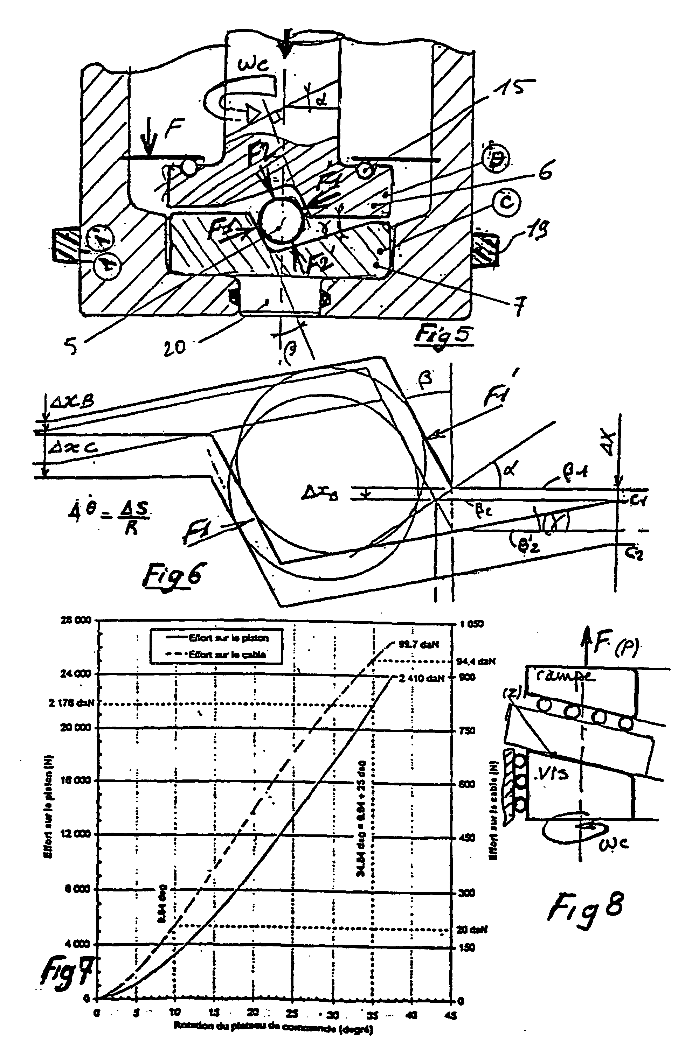

La figure 5 montre le sens de l'application des forces sur la bille (F1) pour le rattrapage d'usure, (F2) pour la mise ne charge résultant de l'effort de compression par (6) sur (7) par action du frein à main sur les billes (5).

La figure (6) montre la relation entre la rotation différentielle des plateaux et le mouvement d'écartement ce ceux-ci.
Δx_{B} = déplacement hydraulique du plateau (B) ;
Δx_{C} = déplacement hydraulique du plateau (C) ;
Δ⊖ = ΔS / R rotation du plateau (B) nécessaire pour garder le contact,
Avec R = distance de l'axe au point de contact bille plateau
δr = Δx_{C} - Δx_{B}
ΔS = Δx_{B} / tg α = (Δx_{C-}δr) / tg α et
ΔS = (Δx_{C} - Δx_{B}) tg β = δr . tg β , d'où :
δr = Δx_{C} / (1 + tg α . tg β) = Δx_{C} / (1 + P_{V} / P_{B})
avec P_{V} = pas de la vis et P_{B} = pas de la butée, et
α = angle de la trajectoire d'un point de B situé à la distance R de l'axe, par rapport à l'horizontale ; tg α = P_{V} / 2 π R ; d'où :
δr = 0 d'où PB = 0 et β = π / 2

La figure (7) montre l'efficacité du système avec un rendement supérieur à 0,95 caractérisant ce type de conception.

Dans une version optimisée du système, l'angle (γ) de la figure 5 ou (α1) de la figure 8, de mise en charge des billes (5) (ou autres éléments de roulement tels que galets, cônes, tonneaux, ...) sur les rampes des plateaux (6) et (7) (freinage manuel) pourra avoir une valeur initiale puis une valeur finale d'angle de contact avec les billes différente afin d'augmenter l'effort de sortie sur le piston avec la course minimale du levier de commande (11). La figure 8 permet de préciser les deux fonctions de la mise en charge par le frein à main, premièrement, rotation de la vis avec un pas (α2) et un fort frottement en (Z), deuxièmement roulement sur la rampe avec un pas (α1) (effet de coin) générant un effort maxi (F_{P}) sur le piston afin d'éviter tout dévissage (ou relâché de contrainte) en fonctionnement, les pas (α1) de la rampe (6/7) et (α2) de la vis (3 / 1) seront sensiblement identiques, cette donnée caractérisant le système : (α1) = (α2). Evidemment les descriptions ci-dessus ne limitent pas les revendications du système, d'autres présentations pouvant être effectuées par l'homme de l'art tout en restant dans le cadre de l'invention.

## Revendications

1. Système de frein de parking, pour frein à disque, dans lequel en freinage manuel la mise sous contrainte des patins (8) sur le disque (4) par le piston (2) se fasse par la rotation d'une vis (1) dans un écrou (3), ou vice versa qui se bloque par frottement à la mise en charge sous couple, déclenchant un mouvement d'écartement de rampes des plateaux ((6) et (7)) par des éléments de mise en charge par roulement (5) pris en sandwich entre ces plateaux, **caractérisé en ce que** les éléments de mise en charge par roulement (5) sont placés en nez de piston proche du disque (4).

2. Système selon la revendication 1, **caractérisé en ce que** les éléments de mise en charge par roulement (5) , entre les plateaux (6) et (7), soient des billes, des rouleaux, des tonneaux, des galets ...

3. Système selon la revendication 1, **caractérisé en ce que** les rampes (6) et (7) puissent avoir des pentes de début et de fin de charge différentes.

4. Système selon la revendication 1, **caractérisé en ce que** l'organe élastique (14) de maintien en sandwich des billes soit un ressort de compression, de torsion, ou une rondelle élastique.

5. Système selon la revendication 1, **caractérisé en ce que** les pas de la vis (1) et des rampes des plateaux (6) et (7) soient sensiblement identiques afin d'éviter les dévirages comme rotations inverses sous charge.

6. Système selon la revendication 1, **caractérisé en ce que** la mise à zéro par recul piston (2) pour changement patins (8) puisse se faire par action sur un piston central (20).

7. Système selon la revendication 1, **caractérisé en ce que** la mise en translation initiale du piston (2) et le transfert par blocage à la fonction de mise en charge par roulement de (5) entre (6) et (7) se fasse par le principe d'un écrou flottant (3) sur une vis (1) avec moyens de roulement en entrée (21) et en sortie de couple (5).

8. Système selon la revendication 1, **caractérisé en ce que** la fonctionantipoussière entre le piston (2) et le piston (20) soit assurée par un opercule (22).

## Claims

1. System of brake of parking, for disc brake, in which in manual braking, the put under constraint of the pads( 8 ) on the disc ( 4 ) by the piston ( 2 ) is made by the rotation of one screw (1) in a nut, or vice versa, which lock by friction when you put in load(responsibility) under couple, activating(starting) a movement of space of the slopes of (trays) flats ( 6 and 7 ) by elements of put in load , by movement (5) taken in sandwich between these trays, placed in nose of piston near the disc ( 4 ).

2. System according to the claimed 1, **characterized in** the fact that the elements of put in load by rolling (5) between trays (6) and (7), is balls, rollers, pebbles....

3. System according to the claimed 1, **characterized in** what slopes (6) and (7) can have different angles of the beginning and the end of load.

4. System according to the demand 1 **characterized in** the fact that the elasticated organ (14) of preservation in sandwich of balls, is a compression spring of twist spring, or a slice spring.

5. System according to the claimed 1 **characterized in** the pinch that of screw (1) and banisters of trays (6) and (7) are appreciably identical to avoid dévirages in inverse rotation under load(responsibility).

6. System according to the claimed 1 **characterized in** the fact that the stake with zero by the recession(drop) piston (2) for the change of pads (8) can be made by the central piston (20).

7. System the claimed 1 **characterized in** the fact that the stake in initial translation of the piston (2) and the transfer by blocking in the function(office) of stake under load(responsibility) by movement of (5) between (6) and (7) is made by the principle of a floating nut (3) on one lived (1) with means of movement in entrance(entry) (21) and to exit(release) of couple (5).

8. System according to the claimed 1 characterized there n that the function(office) anti-dust between the piston (2) and the piston (20) is realised by an opercule (22)

## Patentansprüche

1. Ein System von Parkbremse, für Scheibenbremse, in dem das Legen unter Zwang der Schlittschuhe(Kufen) (8 ) auf der Schallplatte(Scheibe) (4 ) vom Kolben ( 2 ) im Handbremsen, von der Umdrehung einer Schraube (1) in einer Schraubenmutter kommt, oder umgekehrt, das von Reibung im Druckbelastungsanstieg unter Paar blockiert, das eine Entfernungsbewegung der Handläufe der Tablette ( 6 und 7 ) von Elementen von Druckbelastungsanstieg abwechselnd (5) Genommene im Sandwich zwischen diesen Tellem(Tabletten) auslöst, in der der Schallplatte(Scheibe) ( 4 ) nahen Kolbennase gestellt sind.

2. System nach der Anforderung 1, das darin charakterisiert ist, was die Elemente von Druckbelastungsanstieg abwechselnd (5) zwischen Tellem(Tabletten) (6) und (7), Kugel sei, Rollwalzen(Rollen), Steine....

3. System nach der Anforderung 1, das darin charakterisiert ist, was die Handläufe (6) und (7) unterschiedliche Abhänge von Anfang und von Ladeende haben können.

4. System nach der Anforderung 1 Charakterisiertes darin, was das elastische Organ (14) Weiterbestehens im Sandwich der Kugel, eine Dralldruckfeder sei, oder eine Federscheibe.

5. System nach der Anforderung 1 Charakterisiertes darin, was die Schritte der Schraube (1) und Handläufe der Teller(Tablette) (6) und (7) empfindlich identisch sind, um den dévirages in der umgekehrten Umdrehung unter Aufgabe(Last) zu vermeiden.

6. System nach der Anforderung 1 Charakterisiertes darin, was das Legen in Nullpunkt vom Rückgang Kolben (2) für die Veränderung der Schlittschuhe(Kufen) (8) kann vom zentralen Kolben kommen (20).

7. System die Anforderung 1 Charakterisiertes darin, was das Legen in der anfänglichen Translation des Kolbens (2) und die Überweisung(Transfer) von Blockieren in die Funktion von Legen unter Aufgabe(Last) abwechselnd (5) zwischen (6) und (7) vom Prinzip einer Schraubenmutter, das schwimmt, kommt (3) auf einer Schraube (1) mit Mitteln von Rollen(Wälzlager) im Eingang (21) und im Eheauslauf(Eheausfuhr) (5).

8. System nach der Anforderung 1 Charakterisiertes darin, was Antistaub die Funktion der Kolben (2) eintritt und der Kolben (20) ist von einem Kiemendeckel versichert(gewährleistet) (22)
